# EUROPEAN PATENT APPLICATION

(11) **EP 3 159 841 A1**
(43) Date of publication of application: **26.04.2017**
(21) Application number: 15306677.4
(22) Date of filing: 20.10.2015
(51) Int. Cl.: G06Q 20/32

(54) **CONVENIENT AUTHENTICATION METHOD FOR CARD BILLLING**

(71) Applicant: Netsize, 92190 Meudon (FR)
(72) Inventor: DUBREUIL, Arnaud, 92190 MEUDON (FR); MATHIS, Bruno, 92190 MEUDON (FR)
(74) Representative: Scheer, Luc

(57) **Abstract**

The present invention relates to an authentication method of a user using a user device (USR), said method authenticating the user before triggering a payment for a service, said user device (USR) storing a payment service key (PSK) to access a service provided by a service provider (SPBE) relying on a payment service server (PSS) for payment of the service by the user, said payment service server (PSS) having access to a database where user's bank data (BD) are associated with a communication link identifier (CLI) and with a payment service key (PSK).

## Description

### FIELD OF THE INVENTION

The present invention relates to an authentication method of a user using a user device, said method authenticating the user before triggering a payment.

The invention also pertains to a payment service server to implement an authentication method according to the invention. It also relates to a user device to be used in combination with a payment service server according to the invention in the implementation of an authentication method according to the invention.

### BACKGROUND OF THE INVENTION

Generally, payments imply multiple actions to be performed by a user on his/her user device, typically a mobile phone.

The whole industry tries to implement one click billing solutions with card billing where end users are authenticated and do not need to enter their credit card details at each purchase. All the online one click billing solutions available on the market have in common the use of a login/password.

One might think that for digital services users always have a login/password. In reality this is not the case, especially on mobile. Thus, for many digital services, end users are not requested to have login/passwords and do not wish to create one for these services.

Service providers want to avoid to ask too many information to end users as it affects drastically conversion and more specifically for the model which is the most widely used, Freemium. Besides, merchants do not want to ask users to create an account for a free application as most probably end users won't use it.

However, they want to monetize the huge base of users they have but, for this, they need to authenticate them. Therefore there are a lot of services for which merchants want efficient payment solutions without login/ password.

Further alternative and advantageous secure solutions not requesting the use of a login/password would, accordingly, be desirable in the art.

### SUMMARY OF THE INVENTION

This invention proposes an authentication solution without the use of login password by using a cross authentication mechanism between Mobile Network Operator billing (invoicing the user on his/her mobile operator invoice) and card billing.

The present invention is defined, in its broadest sense, as an authentication method of a user using a user device, said method triggering a payment for a service, said user device storing a payment service key to access a service provided by a service provider relying on a payment service server for payment of the service by the user, said payment service server having access to a database where user's bank data are associated with a communication link identifier and with a payment service key, said method comprising the steps of, once a payment by card request has been emitted by the user using a service provider interface on the user device, for the payment service server:
- receiving the payment service key as stored in the user device,
- checking the establishment of a communication link as identified by the communication link identifier associated with the received payment service key,
- extracting the user's bank data associated with the received payment service key,
- using the user's bank data in relation with a bank server to proceed to the payment,
- sending an authorization message to the service provider for grant of the service to the user.

The invention is based on an association of the payment on operator invoice and card billing. The main advantage of mobile network operator (MNO) billing over card Billing is the use of a one click billing, or at least few actions' payment, without any login/password. Therefore the invention uses a mechanism of cross authentication of the end user between the two billing methods so that card billing can benefit from a one click billing without any login/password. The invention is applicable to web and native applications.

It is here noted that steps of the method can be done in a different order. In particular, the step of checking the establishment of a communication link as identified by the communication link identifier associated with the received payment service key can be performed after the extraction of the bank data and the payment.

The invention enables to authenticate the user while he/she requests a card payment using the payment service key. With the invention, the presence of a valid payment service key enables to authenticate the user. According to the invention, the payment service key enables to assure that at least one previous payment was done using the communication link identifier, including a payment by MNO billing. It is then possible to associate bank data or to use stored bank data. Advantageously bank data are stored encrypted. It gives a satisfying level of security.

The invention makes the link between 3 tokens:
- a payment service key stored on devices used for purchases. This key is proprietary to the secure payment service provider and is useless to a hacker that would access to it without the connection to the secure payment provider platform and to the billing methods of this secure payment provider.
- the tokenized bank data, typically payment card details. This information is advantageously encrypted by a payment card industry (PCI) compliant entity, i.e. a payment service provider, a processor or an acquirer, and cannot be used by any hacker without a connection to the secure payment platform that generated it.
- the communication link identifier, typically the MSISDN or a mobile network operator (MNO) billing ID, that is issued by the operator. This element alone cannot be used to perform card billing payment. The strongest communication link identifier is MSISDN. Other kinds of communication link identifier like an IP@, an IMSI or an encrypted MSISDN can be used in particular implementations.

Main advantages of the invention are that a one click (or at least very few actions) billing can be performed, that login/password are not mandatory, that multiple billing methods are supported and that no change in usual mechanisms of security for payment cards.

According to a particular feature, the user choosing between a card billing and an operator billing at the payment request, said choice is also received by the payment service server.

This enables the server to manage both billings in similar security condition using a link between the PAN of the payment card, advantageously encrypted, which are the bank data and a key stored on the devices used for purchases to be used to recognize the user. The direct link between these two being quite weak, the invention introduces the use of a much stronger link using a communication link identifier, typically the MSISDN or an MNO billing ID, obtained thanks to MNO connections. The invention enables the user to choose.

According to an embodiment, the step of checking the establishment of a communication link comprises, the established communication link being supported by a mobile network operator, an http authentication, said http authentication enabling to associate a communication link identifier retrieved from the communication link with the payment service key.

Typically, the secure payment service server is certified by the MNO and is habilitated to receive communication link identifier in the communication link itself as soon as this one is supported by the MNO.

According to a specific feature of the invention, the step of checking the establishment of a communication link comprises, when the communication link identifier is not accessible at the reception of the payment service key, sending an SMS using the communication link identifier, said SMS comprising an OTP to be returned to the payment service server for an issuance of a positive result of the checking step.

This feature enables to retrieve a communication link identifier in case a communication link not carrying an identifier is used by the user device. It also enables to know that it is the owner of the identifier who requests the payment. Here the communication link identifier is an MSISDN as otherwise actually the OTP flow cannot be implemented.

According to an advantageous feature, the method being implemented using a native application, the OTP is extracted automatically from the SMS by an application proposing the payment service.

Such an automatic capture of the OTP is useful to avoid the user to have to input it after having received and read it. This particularly applies in native applications where a dedicated module is dedicated to this automatic extraction of an OTP.

According to an embodiment of the invention, the method comprises a preliminary step of checking the presence of a payment service key stored on user device.

This embodiment enables the establishment of the association between the three values of the invention by firstly checking if this association was previously performed and, if not, triggering steps to make this association.

According to an advantageous embodiment, the method comprises the following preliminary steps enabling to associate the communication link identifier to user's bank data and to a payment service key in case no payment service key is present and no previous card billing was performed:
- when communication link identifier is accessible, generating a payment service key and sending it for storage in the user device, and, when communication link identifier is not accessible, generating a partial payment service key and sending it for storage in the user device,
- prompting the user to enter bank data,
- associating the user's bank data to the generated payment service key and to the accessed communication link identifier to the generated or to the generated partial key.

These preliminary steps enable to associate the bank data of the user, typically, his/her card number at least, to a generated key and to the communication link identifier if present in the communication link. At the end of these preliminary steps, at least two values are associated. The presence of a partial key means that the communication link identifier was not available for association. The presence of a payment service key, also called full payment service key, means that an association with a communication link was realized with the payment service key. Full key is generated as soon as a strong MNO authentication is performed, i.e. when a communication link identifier is available. The presence of a payment service key thus means that a communication link identifier was extracted, not necessarily that bank data were associated. It is in particular the case when no card payment was previously done but only MNO billed payment.

There are thus two types of payment service keys which can be stored in devices:
- partial access payment service keys called "partial key" in following specification, where MSISDN or MNO billing ID authentication could not be performed
- full access keys called "full payment service key" or simply payment service key in the specification, where MSISDN or MNO billing ID authentication has been performed successfully

Different rights can be provisioned to these keys at the payment service provider: key validity period, spending limits, use from different IP@, ... This is useful to counter frauds.

At any point of time, only one valid key is present on the device for web and only one valid key is present on the device for native app. Keys are proprietary to the payment service provider and could be used across merchants. In any case, the invention does not change the use of usual security mechanisms for card payment: request for CVV/CVC, use of 3D secure, ...

According to a further embodiment of the invention, when the step of checking the presence of a payment service key results in the presence of a partial payment service key, and when the step of checking the establishment of a communication link enables to retrieve a communication link identifier, further generating a payment service key and sending it for storage in the user device.

This embodiment enables to fulfill the association with a full payment service key if ever, after the generation of a partial key, a communication link identifier becomes available at a next payment request.

The present invention also relates to a secure payment service server to implement an authentication method according to the invention to authenticate a user using a user device storing a payment service key to access a service provided by a service provider relying on a payment service server for payment of the service by the user, said payment service server having access to a database where user's bank data are associated with a communication link identifier and with a payment service key, said payment service server having emission/reception module to communicate with the user device and with the service provider server, an link establishment verifier to verify the establishment of a communication link as identified by the communication link identifier associated with the received payment service key, extraction module to extract user's bank data associated with the received payment service key and communication link identifier from the database, transaction module to proceed to a payment using the user's bank data in relation with a bank server.

Such a secure payment service server enables to process card billing with the association of the invention enabling a few actions authentication for the user, typically a one click payment.

The invention also relates to a user device to be used in combination with a payment service server according to the invention in the implementation of an authentication method according to the invention, said user device having storage to store a payment service key to access a service provided by a service provider relying on a payment service server for payment of the service by the user, said payment service server having access to a database where user's bank data are associated with a communication link identifier and with a payment service key, emission/reception module to communicate with the payment service server and with a service provider and in particular to establishment a communication link as identified by the communication link identifier associated with the received payment service key.

Such a user device adapted to store a payment service key and to communicate with a payment service server and a service provider enables the user to access a service through a one click payment. Typically a web site accessed by the user device and using cookies or a native application stored in the user device enables to adapt the user device according to the invention.

According to a particular implementation, the service provider interface being a web site, payment service keys are stored in cookies.

This implementation enables a simple storage of the payment service key in the user device.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 shows a sequence diagram showing exchanges between different entities during the implementation of the method of the invention in the case the user chose a mobile phone bill payment;
- Figure 2 shows a sequence diagram showing exchanges between different entities during the implementation of the method of the invention in the case the user chose a card payment;
- Figure 3 shows a flowchart presenting in details the steps of the method of the invention as implemented in the secure payment service server in the case the user chose a mobile phone bill payment; and
- Figure 4 shows a flowchart presenting in details the steps of the method of the invention as implemented in the secure payment service server in the case the user chose a card payment;
- Figure 5 schematically shows a secure payment service server according to the invention;
- Figure 6 schematically shows a user device of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

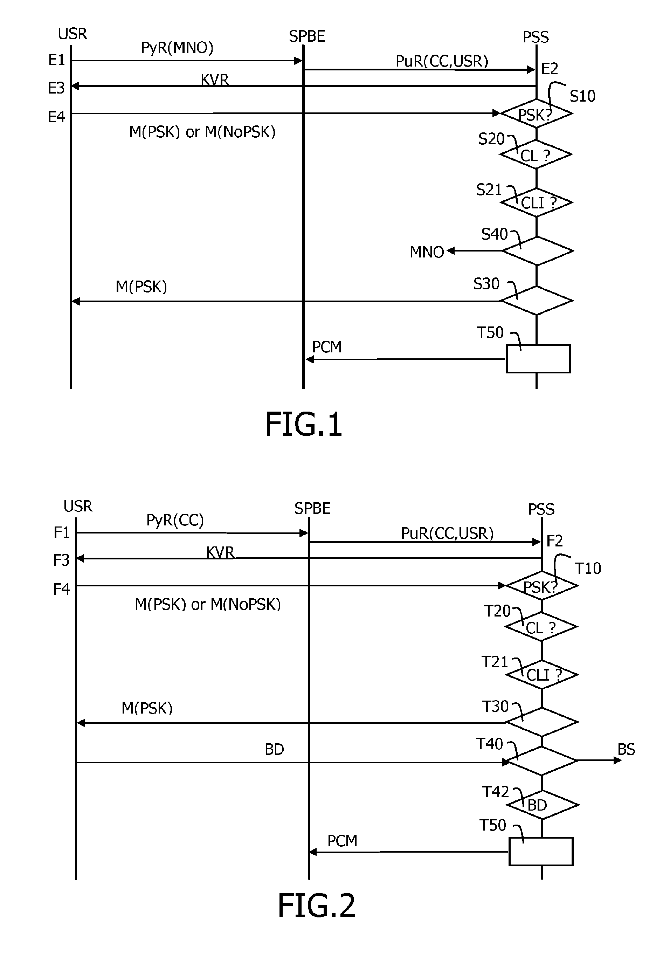

Figure 1 is a sequence diagram showing schematically successive exchanges according to the invention between a user device USR, a service provider back-end SPBE, being typically a merchant back-end, and a secure payment service server PSS. This figure shows the case where the user chose a mobile phone bill payment.

In a first exchange E1 after establishing a communication with the service provider back-end SPBE, the user device USR sends a payment request PyR(MNO) with the option MNO to invoice the payment on the mobile phone bill to the service provider back-end SPBE.

Receiving this payment request PyR(MNO), the SPBE sends a purchase request PuR(MNO,USR) from the user device USR to the secure payment service server PSSPSS in a second exchange E2. The secure payment service server then sends a key verification request KVR in a third exchange E3.

In the answer exchange E4, the user device USR sends a message M(PSK) comprising a payment service key PSK as previously stored by the secure payment service server PSSPSS if available or comprising a notification stating the absence of payment service key M(NoPSK) if no such key is stored.

In a step S10 the PSS checks the presence of a payment service key PSK in the received message.

If a payment service key PSK is present in the message, in a step S20, the PSS then investigates the type of communication link CL established with the user device USR and subsequently checks, in a step S21, the presence of communication link identifier CLI using the communication link CL.

If a communication link identifier CLI can be retrieved using the communication link CL, the secure payment service server PSS checks the correct association of the retrieved communication link identifier CLI with the received payment service key PSK and uses MNO invoicing data of the user in a step S40 to be sent to the mobile network operator MNO in order the payment to be introduced in next mobile phone bill. At this time, an MNO billing is performed as the communication link identifier enables to identify the user but no bank data are associated with the communication link identifier and with the payment service key , the presence of this key meaning that a communication link identifier is associated.

In an advantageous embodiment, in a step S37, validity of the received payment service key is extended and a payment confirmation message PCM is sent to the service provider premises SPBE for it to grant access to the service to the user.

In the case no payment service key is available, the successive steps of investigating the communication link CL, checking the presence of a communication link CL using the communication link CL and uses extracted MNO invoicing data to invoice the user on his/her mobile phone bill are identical. The goal of this step is only to have a strong authentication using the communication link identifier and thus to generate a payment service key.

Besides a payment service key is generated as a strong authentication is performed thanks to the communication link identifier. The presence of a payment service key associated with the communication link identifier signifies that a communication link identifier was associated to the user device and can be used to authenticate him/her.

This situation indeed corresponds to preliminary steps of the invention where, at the last step S30, a payment service key PSK is created and sent to the user device USR for storage. In parallel, in a step S50, a payment confirmation message PCM is sent to the service provider premises SPBE for it to grant access to the service to the user.

The payment service key associated to a communication link identifier enables any further MNO billing to be performed and will be useful to associate bank data later in order to improve authentication for one click payment using card while not introducing any security issue.

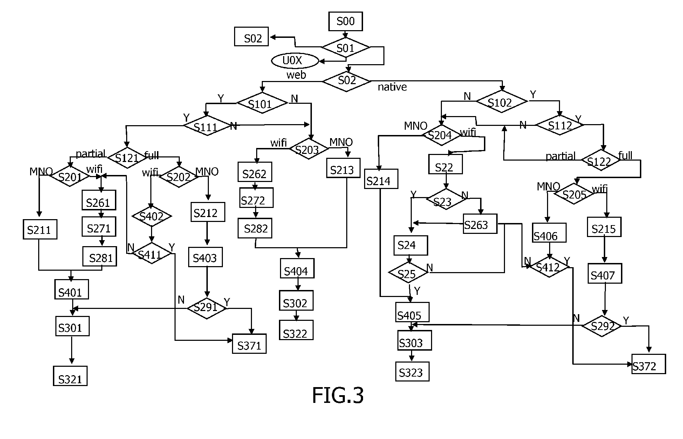

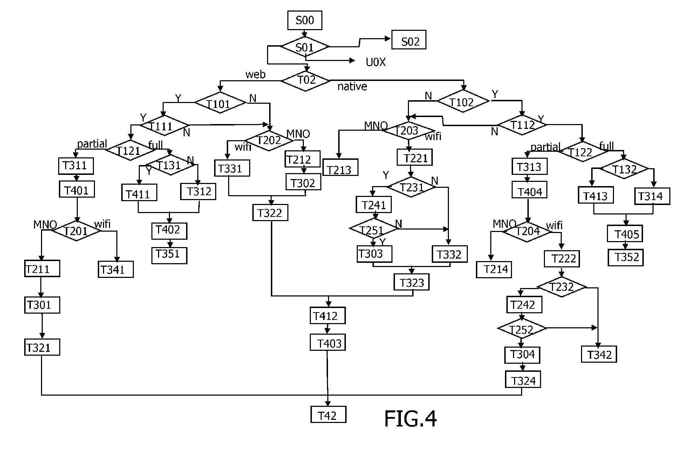

Also, it is here noted that all possibilities are not shown on this figure for clarity reason. It is the purpose of the later described figures 3 and 4 to show all possibilities, including preliminary steps.

Figure 2 is a sequence diagram showing schematically successive exchanges according to the invention between a user device USR, a service provider back-end SPBE, being typically a merchant back-end, and a secure payment service server PSS in the case where the user chose a credit card payment. First exchanges F1 to F4 are comparable to the four exchanges E1 to E4 of figure 1 except that the requests state that the user chose a credit card payment CC.

The two first steps T20 and T21 of the method as implemented in the payment service server PSS are also similar to the first ones S20 and S21 of figure 1. When a communication link identifier CLI can be retrieved from the established communication link CL, a payment service key PSK is generated and sent to the user device USR in a message M(PSK) in a step T30. Once the user device USR receives a valid payment service key PSK, if previous bank data were associated to the key, the user is recognized and the payment is performed in a step T40. The user is prompted to enter bank data if payment service key does not exist or if it expired.

So if no previous card payment was done or if the present key is not anymore valid or if no payment service key is available, the user is prompted to enter his/her bank data BD which are sent in return to the secure payment service server PSS in order to trigger the payment in a step T40 in collaboration with a bank server B and also, for the bank data BD to be associated to the payment service key PSK and to the communication link identifier CLI in a secure payment service server's database in a step T42. In the case the user previously performed a successful payment using a card, he/she is recognized using the communication identifier while the payment service key is sent to the secure payment service server PSS and the payment by card is done in one click according to the invention using the previously associated bank data.

This sequence of steps corresponds to preliminary steps of the method of the invention. After this sequence, the method of the invention as defined in independent claims is ready to be used. A payment confirmation message PCM is then sent to the user device USR in a step T50 once the payment is confirmed by the bank server BS. In parallel an authorization message AM is sent to the service provider premises SPBE for it to grant access to the service to the user.

Advantageously, according to the invention, each time a full authentication of the invention is performed, a new payment service key PSK is generated to be associated with the bank data BD and the communication link identifier CLI or the right of a previously generated payment service key is extended. This generated key is stored in the user device USR.

Figure 3 shows a flowchart presenting the method in details including the preliminary steps corresponding to situations where the association of bank data with a communication link identifier and a payment service key is not fully performed. Figure 3 shows in details the cases where the user chose a billing on the next operator invoice. In this MNO billing flowchart, most part of the cases corresponds to preliminary steps where a payment service key is associated to a communication link identifier. No association with bank data BD is encountered in this figure. The whole authentication according to the invention, i.e. using the association of a payment service key, a communication link identifier and bank data will then be described on next figure 4.

In a first step S00, the user device USR accesses a service to be paid typically using a local client like a native application or a web site. In a step S01, the user selects a payment option. On figure 3, three options are possible, a card billing leading to step T02 and other steps as disclosed on next figure 4, an MNO billing which leads to step S02 and next steps as disclosed on figure 3 or another billing type leading to a step U02 and subsequent steps, not parts of the invention.

Step S02 checks if the client is a native application or a web site. In case of a web site, a step S101 of verifying the presence of a payment service key PSK in cookies is performed. If yes (case Y in S101), a step S111 of verifying the validity of the key is performed. If the payment service key PSK is not valid anymore, the secure payment service server follows the process as if no key where detected, which is case N of step S101.

If the key is valid (case Y of S111), a step S121 checks if the PSK is a partial key pPSK or a full one PSK. According to the invention and as it will described later on figure 4, a partial payment service key pPSK corresponds to a weak association with the bank data BD, i.e. without any communication link identifier CLI.

In case of a partial pPSK, a step S201 investigates the nature of the communication link CL established with the user device USR. In case where the communication link CL is supported by an operator MNO, the secure payment service is assigned to receive communication link identifier CLI of the user device USR, like a phone number or a registration identifier. Such information are pushed by the operator MNO in the communication link as soon as the secure payment service has an agreement with it and has been certified as secure partner by the operator MNO. The secure payment service server PSS then realizes an http authentication of the user device USR in a step S211 and performs payment using MNO billing in a step S401.

Then, as the presence of a partial key shown the presence of bank data BD in database of the secure payment service server and as a communication link identifier was retrieved on the MNO communication link, a full association is reached according to the invention, a full payment service key PSK is then generated in a step S301 and this key is sent to be stored in cookies to the user device in a step S321. At the end of this branch, the user device is able to perform an authentication as defined in the invention.

If, in step S201, the communication link is detected as a wireless one of the wifi kind, in a step S261, the user is prompted to enter a communication link identifier CLI, typically his/her MSISDN, i.e. his/her phone number or an identifier where he/she can be reached. Then a one-time password OTP is sent to this communication link identifier CLI in a step S271 and the user is prompted to enter the OTP in a step S281.

Once the OTP is entered and returned for verification to the secure payment service server PSS, the secure payment service server PSS performs a billing on the next operator invoice if the OTP is correct in a step S401. If not correct (not represented for clarity reason on the flowchart), the payment failed and process is started again at step S01 for the user to chose another payment type. Two next steps S301 and S321 of a full payment service key PSK and storage of it are then performed.

If a full payment service key PSK is detected at step S121, then a communication link investigation step S202 is performed, knowing, by definition of the payment service key PSK, that bank data BD have been previously associated to the payment service key PSK. In case of a communication link CL supported by MNO, an http authentication is performed in a step S212 and secure payment service server PSS performs an MNO billing in a step S403. Then in a step S291, it is checked if the communication link identifier CLI as used for the http authentication is the same as the one stored on the secure payment service server PSS in association with the payment service key at least and also with the bank data BD if ever the user has already paid with his/her card. If yes (case Y), the validity of the payment service key PSK is extended in a step S371. If not (case N), then the secure payment service server generates a new payment service key, full one, in a step S301 and sends the new PSK to the user device USR for storage in a step S321. This case enables the user to change his/her SIM card or to change his/her phone while keeping the one click payment as previously configured according to the invention.

In the case of a non-operator operated communication link, for example using wireless protocol like wifi, the secure payment service server uses the communication link identifier CLI as associated with the detected full payment service key PSK to perform an MNO billing in a step S402. In a step S411, the success of the billing is checked. If successful (case Y), the validity of the payment service key PSK is extended in a step S371. If not (case N), then the user is prompted to enter his/her communication link identifier CLI in a step S261. This situation corresponds to a failure of the payment due to the MSISDN, i.e. a cancelled line, a MSISDN ported by the user... Then step S271 and S281 as previously described are performed with following payment steps S401 and payment service key generation steps S301 and S321. What can also occur is that the user has not enough credit in case of prepaid card or that the MNO platform is down. In this case the payment cannot simply be performed. In such a case, the degradation of a full key in a partial key could be contemplated as well as an invalidation of the key.

In the case no payment service key PSK at all is detected in step S101 or no valid key PSK in step S111, a communication link investigation step S203 is performed. In case the communication link is supported by an operator MNO, communication link identifier is extracted and an http authentication is performed in a step S213. This authentication leads, as previously, to an MNO billing in a step S404 and, as now a communication link identifier CLI is available, a payment service key PSK is generated in a step S302 and this last is sent to the user device USR to be stored in a step S322. Indeed a full key is generated as soon as a communication link identifier has been identified for sure.

If, in step S203, the communication link is detected as being a wireless one of the wifi kind, in a step S262, the user is prompted to enter a communication link identifier CLI, typically his/her MSISDN, i.e. his/her phone number or an identifier where he/she can be reached. Then a one-time password OTP is sent to this communication link identifier CLI in a step S272 and the user is prompted to enter the OTP in a step S282.

Once the OTP is entered and returned for verification to the secure payment service server PSS, the secure payment service server PSS performs a billing on the next operator invoice if the OTP is correct in a step S404. If not correct (not represented for clarity reason on the flowchart), the payment failed and process is started again at step S01 for the user to chose another payment type. Two next steps S302 and S322 of a full payment service key PSK generation and storage of it are then performed.

In the case of a native application detected in step S02, it is checked in a step S102 if a payment service key PSK is stored in shared preferences.

If yes, the validity of the key is checked in a step S112. If not valid, the secure payment service server PSS behaves like no key was detected in step S102. If valid, the payment service key is investigated to know if it is a partial one or a full one in a step S122. In case it is a full one, a step of investigation of the communication link S205 is performed. If MNO based communication link is detected, an http authentication as already disclosed is performed in a step S215 before an MNO billing be performed in a step S407. Then it is checked if the communication link identifier is the one as stored in association with the payment service key PSK in a step S292 and if yes (case Y), the validity of the payment service key PSK is extended in a step S372. If not (case N for S292), the secure payment service server PSS generates a new service payment key PSK in a step S303 and sends it to the user device for storage in a step S323.

If a wireless communication link like wifi is detected in step S205, the secure payment service server PSS performs an MNO billing in a step S406 and checks the success of the billing in a step S412. If successful, the validity of the payment service key PSK is extended in a step S372. If not, the user is prompted to enter his/her communication link identifier, like a phone number, in a step S263. The communication link identifier is used in a step S24 to send a one-time password. The catch of the OTP by the native application is then checked in a step S25. It is here noted that an automatic catch of the OTP is here used as the method is performed using a native application. However, steps as S26x to S28x could also be implemented at this level in the native application.

In particular if the OTP is not caught automatically, the prompting of the user to enter his/her communication link identifier can be reiterated or steps equivalent to S26x to S28x could be implemented.

If the OTP is caught by the application (case Y in step S25), an MNO billing is performed in a step S405, a payment service key is generated in a step S303 and sent for storage to the user device USR in a step S323.

In the case no payment service key PSK is present or if not valid, a communication link investigation step S204 is performed. In case the communication link is supported by the operator MNO, an http authentication is performed in a step S214, and the secure payment service server PSS performs a MNO billing in a step S405, a new payment service key is generated and sent for storage in steps S303 and S323.

If a wireless communication link is detected in step S204, then the native application is advantageously developed to extract a communication link identifier from a secure element, typically a SIM card or an embedded secure element, in the user device in a step S22. If the information is present, case Y of next step S23, it is used in a step S24 to send an OTP to be caught automatically in a step S25. A payment by MNO billing is triggered in a step S405 once the OTP is caught. Again a service payment key is generated and sent for storage in steps S303 and S323.

Figure 4 is a flowchart disclosing steps when user has chosen a card billing in step S01. This corresponds to the object of the invention which relates to card billing for which MNO mechanisms improves the authentication part. Steps disclosed in figure 3 are thus generally preliminary steps performed in a user device of the invention where the three values/tokens have to be associated. However the presence of a payment service key can also signify that a whole association was done, i.e. with bank data, but it can also only mean that the key was only associated to communication link identifier.

In a step T02, it is detected if the client on the user device is a native application or a web site.

In case a web site is detected, the presence of a payment service key PSK in cookies is checked in a step T101. If a key PSK is detected (case Y in step T101), the validity of this key PSK is checked in a step T111. If not, the following steps are as if no key was detected in step T101. If the key is valid, then the nature of the key, partial or full one is checked in a step T121.

If a partial payment service key is detected, previously registered card is proposed to user in a step T311. Then in step T401 a payment by card is performed. This does not correspond to full implementation of the invention, i.e. no communication link identifier was associated, but the use of the partial key however enables to previously associate bank data to a payment service key. This is useful for the bank data to be used for payment even while no full association was done with a communication link identifier. Authentication is weaker but it however enables a quick payment for the end user not to wait on its payment page. The goal is then to transform at a subsequent payment the partial key associated with bank data in a full key.

In the shown embodiment, the payment is done as soon as a partial key and bank data are available and once payment is done, http authentication is launched to try to convert the partial key to full payment service key.

Then a communication link investigation step T201 is performed. If the communication link is supported by the operator MNO, as the secure payment service server is certified, it accesses communication link identifier. It is thus possible to perform an http authentication in a step T211. Subsequently, the secure payment service PSS generates a payment service key PSK, a full one, and this key is sent to the user device for storage in a step T321.

If a wireless communication link is detected in step T201, wifi for example, validity of the partial key is extended in a step T341.

In the case a full payment service key PSK is detected in step T121, it is checked if this is the first payment by card in a step T131. If yes, the user is prompted to enter his/her bank data, typically a PAN, in a step T411. If not, which corresponds to the main flow of the invention, registered card is proposed to user in a step T312. Both of these steps result in a payment by card T402 followed by an extension of the validity of the full payment service key in a step T35. This branch indeed signifies the presence of a full association of the three tokens.

If no key are detected in step T101 or if detected key is not valid in step T111, a communication link investigation step T202 is performed. If the communication link is operator supported, an http authentication is performed in step T212 followed by a full payment service key generation T302. If the communication link is wifi supported, a partial payment service key is generated in a step T331. Then generated full or partial key is sent to the user device for storage in cookies in a step T322. Then the user is prompted to enter card details in a step T412 and payment by card is performed in a step T403. In a step T42, an association is then established between the payment service key, the communication link identifier and the tokenized card stored on the secure payment service server side. In case, a full payment service is stored and associated, the next card payment will be according to the invention.

In the case a native application is detected at step T02, the presence of a key is checked in a step T102. If yes, the validity of the key is checked in step T112. If not valid, same steps as for the case where no key is detected in step T102 are performed.

So when no key is detected in T102 or not valid key in T112, a communication link investigation step T203 is performed. If communication link is supported by operator MNO, data are extracted and an http authentication is performed in a step T213. Then a full payment service key is generated in a step T303 and sent to the user device for storage in a step T323.

If a wifi communication link is detected in step T203, a step T221 of retrieving a communication link identifier CLI on a local secure element is performed. The native application is indeed developed in order to be able to make this retrieval. If the information is present as tested in a step T231, the secure payment service server PSS sends an OTP to the communication link identifier via a silent SMS in a step T241. The native application is developed in order for the OTP to be caught in a step T251. If the OTP is not caught, a partial payment service key is generated in a step T332.

If OTP is caught, a full key is generated in step T303. Payment service key, partial or full, is sent to the user device for storage in a step T323. The user is then prompted to enter card details in a step T412. Payment by card is performed in a step T403 and association of the card detail as bank data, of the generated key and of the communication link identifier is performed in a step T42. In case, a full payment service is stored and associated, the next card payment will be according to the invention.

When a valid key is detected in step T112, it is checked if it is a partial or a full payment service key in a step T122. In case of a partial payment secure key meaning that it was not possible to associate a communication link identifier, registered card is proposed to the user in a step T313 and payment by card is performed in a step T404.

Then a communication link investigation step T204 is performed. An http authentication T214 is performed if communication link is supported by MNO. And if communication link is wifi supported, the communication identifier link is advantageously retrieved from a local secure element, typically a SIM card or an embedded secure element in a step T222. If the information is present as tested in a step T232, an OTP is sent via silent SMS to the communication link identifier in a step T242. If the OTP is caught in a step T252, a payment service key is generated in a step T304 and sent to the user device for storage in a step T324. Then association between the three values of the invention is performed in step T42. In case, a full payment service is stored and associated, the next card payment will be according to the invention.

If the information is not present in step T232 or if the OTP is not caught in step T252, the validity of the partial key is extended in a step T342.

If a payment service key is detected as full one in step T122, it is checked if it is the first payment by card in a step T132. If it is, the user is prompted to enter card details in a step T413 and, if not, registered card is proposed to the user in a step T314. Payment by card is then performed in a step T405 and validity of the payment service key is extended in a step T352. This last branch corresponds to the main flow of the invention taking place when a full association is performed.

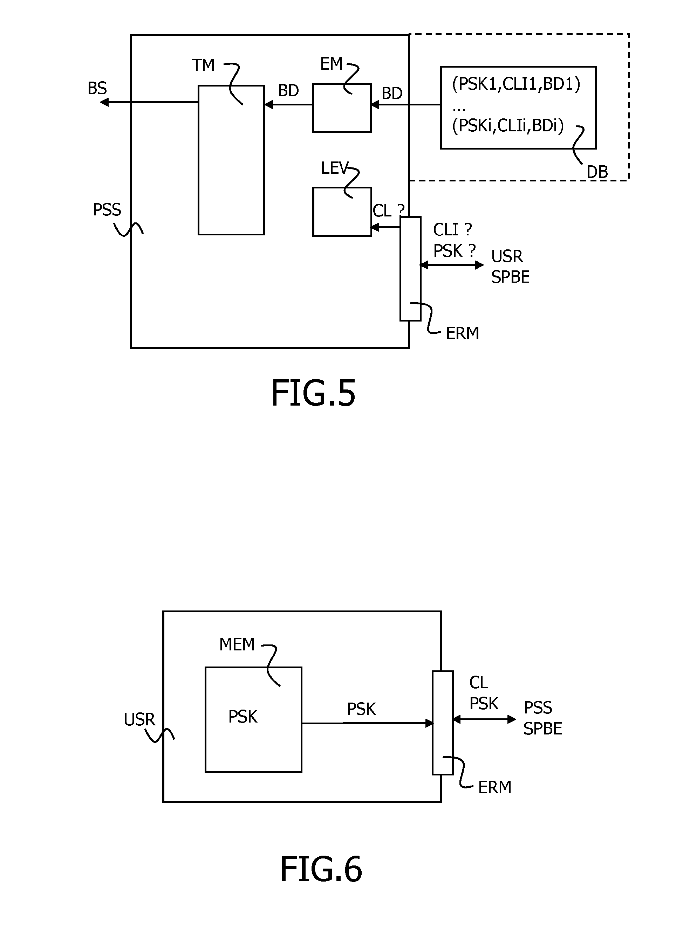

Figure 5 shows schematically a secure payment service server PSS to implement an authentication method according to the invention. This server is able to proceed to the authentication of a user willing to access a service provided by a service provider relying on the payment service server PSS for payment of the service. Said payment service server PSS has access to a database DB where user's bank data BDi are associated with a communication link identifier CLIi and with a payment service key PSKi. Said payment service server PSS has an emission/reception module ERM to communicate with the user device USR and with the service provider server SPBE, a link establishment verifier LEV,to verify the establishment of a communication link CL as identified by the communication link identifier CLI associated with the received payment service key PSK, an extraction module EM to extract user's bank data BD associated with the received payment service key PSK and communication link identifier CLI from the database BD. The secure payment service server PSS comprises at last a transaction module TM to proceed to a payment using the user's bank data BD in relation with a bank server BS.

Figure 6 shows schematically a user device USR to be used in combination with a payment service server PSS according to the invention in the implementation of an authentication method according to the invention. Said user device USR has a storage MEM to store a payment service key PSK to access a service provided by a service provider SPBE relying on a payment service server PSS for payment of the service by the user. The user device USR comprises an emission/reception module ERM to communicate with the payment service server PSS and with a service provider SPBE, in particular, to establish a communication link CL with the secure payment service server PSS.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Authentication method of a user using a user device (USR), said method authenticating the user before triggering a payment for a service, said user device (USR) storing a payment service key (PSK) to access a service provided by a service provider (SPBE) relying on a payment service server (PSS) for payment of the service by the user, said payment service server (PSS) having access to a database where user's bank data (BD) are associated with a communication link identifier (CLI) and with a payment service key (PSK), said method comprising the steps of, once a payment by card request has been emitted by the user using a service provider (SPBE) interface on the user device (USR), for the payment service server (PSS):
- receiving the payment service key (PSK) as stored in the user device (USR),
- checking the establishment of a communication link (CL) as identified by the communication link identifier (CLI) associated with the received payment service key (PSK),
- extracting the user's bank data (BD) associated with the received payment service key (PSK),
- using the user's bank data (BD) in relation with a bank server (BS) to proceed to the payment,
- sending a authorization message (AM) to the service provider (SPBE) for grant of the service to the user.

2. Authentication method according to claim 1, wherein, the user choosing between a card billing and an operator billing at the payment request, said choice is also received by the payment service server (PSS).

3. Authentication method according to claim 1, wherein the step of checking the establishment of a communication link (CL) comprises, the established communication link (CL) being supported by a mobile network operator (MNO), an http authentication (S20), said http authentication (S20) enabling to associate a communication link identifier (CLI) retrieved from the communication link (CL) with the payment service key (PSK).

4. Authentication method according to claim 1, wherein the step of checking the establishment of a communication link (CL) comprises, when the communication link identifier (CLI) is not accessible at the reception of the payment service key (PSK), sending an (S241, T241, T242) using a communication link identifier retrieved by other means, said SMS comprising an OTP to be returned to the payment service server (PSS) for associating the retrieved communication link identifier (CLI) with the payment service key (PSK).

5. Authentication method according to claim 4, wherein the communication link identifier (CLI) is retrieved by extraction (S22) from a secure element present in the user device (USR).

6. Authentication method according to claim 4, wherein the communication link identifier (CLI) is retrieved by prompting (S261, S262,S263) the user to input an identifier.

7. Authentication method according to one of the preceding claims, comprising a preliminary step of checking (S10) the presence of a payment service key (PSK) stored on user device (USR).

8. Authentication method according to claim 7, said method comprising the following preliminary steps enabling to associate the communication link identifier (CLI) to user's bank data (BD) and to a payment service key (PSK) in case no payment service key is present and no previous card billing was performed:
- when communication link identifier (CLI) is accessible, generating (S30x,T30x) a payment service key (PSK) and sending it for storage (S32x,T32x) in the user device (USR), and, when communication link identifier (CLI) is not accessible, generating (T33x) a partial payment service key (pPSK) and sending it for storage (T32x) in the user device (USR),
- prompting (T41x) the user to enter bank data (BD),
- associating the user's bank data (BD) to the generated payment service key (PSK) and to the accessed communication link identifier (CLI) (T42) or to the generated partial key (pPSK).

9. Authentication method according to claim 8, wherein, when the step of checking the presence of a payment service key (PSK) results in the presence of a partial payment service key (pPSK), and when the step of checking the establishment of a communication link (CL) enables to retrieve a communication link identifier (CLI), further generating (S30x, T30x) a payment service key (PSK) and sending (S32x,T32x) it for storage in the user device (USR).

10. Secure payment service server (PSS) to implement an authentication method according to one of preceding claims to authenticate a user using a user device (USR) storing a payment service key (PSK) to access a service provided by a service provider (SPBE) relying on the payment service server (PSS) for payment of the service by the user, said payment service server (PSS) having access to a database where user's bank data (BD) are associated with a communication link identifier (CLI) and with a payment service key (PSK), said payment service server (PSS) having emission/reception module to communicate with the user device (USR) and with the service provider server (SPBE), a link establishment verifier to verify the establishment of a communication link (CL) as identified by the communication link identifier (CLI) associated with the received payment service key (PSK), extraction module to extract user's bank data (BD) associated with the received payment service key (PSK) and communication link identifier (CLI) from the database, transaction module to proceed to a payment using the user's bank data (BD) in relation with a bank server (BS).

11. User device (USR) to be used in combination with a payment service server (PSS) according to claim 10 in the implementation of an authentication method according to one of claims 1 to 9, said user device (USR) having storage to store a payment service key (PSK) to access a service provided by a service provider (SPBE) relying on a payment service server (PSS) for payment of the service by the user, said payment service server (PSS) having access to a database where user's bank data (BD) are associated with a communication link identifier (CLI) and with a payment service key (PSK), emission/reception module to communicate with the payment service server (PSS) and with a service provider (SPBE) and in particular to establish a communication link (CL) as identified by the communication link identifier (CLI) associated with the received payment service key (PSK).

12. User device (USR) according to claim 11, wherein, service provider interface on the user device being a web site, payment service keys (PSK) are stored in cookies.

13. User device (USR) according to claim 11, wherein, service provider interface on the user device (USR) being a native application, payment service keys (PSK) are stored in a native application's memory.

14. User device (USR) according to claim 13 for the implementation of the method as claimed in claim 4, wherein said user device (USR) comprises an OTP handler for an OTP to be caught at the reception of the SMS at the user device (USR) and to be automatically returned to the payment service server (PSS).

15. User device (USR) according to claim 13 for the implementation of the method as claimed in claim 4, wherein service provider interface on the user device (USR) is such that it comprises a display for the OTP to be displayed, and an OTP acquisition element for the user to input read value.
